Europäisches Patentamt

(19) European Patent Office

Office européen des brevets

(11) Publication number: **0 292 222 B1**

(12) **EUROPEAN PATENT SPECIFICATION**

(45) Date of publication of patent specification:
06.03.91 Bulletin 91/10

(51) Int. Cl.⁵: **F16B 5/02, F16B 2/06**

(21) Application number: 88304429.9

(22) Date of filing: 16.05.88

(54) **Energy absorbing joints.**

(30) Priority: 20.05.87 GB 8711886

(43) Date of publication of application:
23.11.88 Bulletin 88/47

(45) Publication of the grant of the patent:
06.03.91 Bulletin 91/10

(84) Designated Contracting States:
DE ES FR GB IT NL

(56) References cited:
EP-A- 0 048 191
EP-A- 0 078 479
EP-A- 0 245 612

(56) References cited:
SOVIET INVENTIONS ILLUSTRATED, Q section, week 8611, April 23, 1986 DERWENT PUBLICATIONS LTD., London Q61
SOVIET INVENTIONS ILLUSTRATED, Q section, week 8607, March 26,1986 DERWENT PUBLICATIONS LTD.,London Q61

(73) Proprietor: WESTLAND GROUP PLC
Group Patents Dept. Box 82, Westland Works
Yeovil Somerset BA20 2YB (GB)

(72) Inventor: Clifford, William Simon
49 Silver Street
South Petherton Somerset, TA13 5AN (GB)

(74) Representative: Jack, Bruce James et al
FORRESTER & BOEHMERT
Widenmayerstrasse 4/I
W-8000 Munchen 22 (DE)

## Description

This invention relates to energy absorbing joints and is particularly concerned with such joints for composite material structural components.

Composite materials have become widely used in the aircraft industry so it is not surprising that the increased emphasis in the development of mechanisms and concepts for absorbing crash energies in order to protect the occupants in the event of a crash or hard landing have included proposals using such materials.

US-A-4593870 discloses an energy absorbing composite structure comprising a thin composite panel having a large angle curved portion at one end which initiates progressive crushing and local folding of the panel in the event of high end loading on the panel.

GB-A-2020780B describes a composite fibrous tube energy absorber designed particularly for a helicopter seat or undercarriage in which a force applied at one end of an elongated composite tube causes disintegration of the tube by reaction with an anvil at its other end.

These sacrificial uses of composite materials have therefore been shown to be an effective energy absorption mechanism ; however, they both rely on the fragmentation and destruction of material to absorb energy and, in that respect they may not be entirely suitable for use in a structure for supporting large mass items such as engines and transmission systems. In some installations, particularly many modern helicopters, where the engines and transmission systems are located above a cabin, post failure structural strength and mass retention is of paramount importance in providing occupant crash protection. Furthermore, the above referenced prior devices are only effective under axial loading so that without additional support structure off-axis loading may produce catastrophic instabilities resulting in structural collapse and a minimum of energy absorption.

In EP-A-0245612 (priority date 14.05.86, however published on 19.11.87) an energy absorbing structure is disclosed consisting of a metal plate spot welded upon a slotted bracket. By means of a bolt the bracket and the plate are clamped together between a Belleville spring and a fixed support. If it is necessary to absorb energy the bolt moves through the solt in the bracket, thereby disintegrating the metal plate. In this case metal from the disintegrating plate may be taken up in the slot in the bracket.

Accordingly, the invention provides an energy absorbing joint for joining separate portions of a structure at least one of which is a composite material portion, comprising clamping means for location on a surface of the composition portion, fastener means extending through complementary holes in the joint portions for securing the clamping means and joint portions together and composite material debris release means in that surface of the clamping means which contacts the surface of the composite portion to permit the controlled release of composite material debris derived from disintegration of the bearing surface of the hole in the composite portion and caused by an excess load on the joint.

In one form of the invention the composite material release means may comprise a counterbore in the contact surface of the clamping means and concentric of the fastener means and in another form may comprise at least one groove in the contact surface of the clamping means and extending between the fastener means and an external surface of the clamping means. Preferably, the width of the groove is greater than a diametral dimension of the fastener means.

The fastener means may comprise a bolt located through the holes in the joint portions and a mating hole in the clamping means.

The clamping means may comprise a splice plate for joining said separate portions by way of a butt type joint or, alternatively, may comprise a perforated annular disc for joining said separate portions by way of a lap type joint.

The invention will now be described by way of example only and with reference to the accompanying drawings in which,

Figure 1 is a schematic drawing of a test apparatus used to demonstrate the present invention,

Figure 2 is a sectioned view taken on lines A-A of Figure 1,

Figure 3 is a schematic drawing of the test apparatus of Figure 1 following a test procedure,

Figure 4 is a sectioned view taken along lines B-B of Figure 3,

Figures 5 and 6 are dynamic load/time curves showing the results of tests undertaken to illustrate features of the invention,

Figure 7 is a plan view of a joint constructed in accordance with one embodiment of the invention,

Figure 8 is a sectioned view taken on lines C-C Figure 7,

Figure 9 is a sectioned view taken on lines D-D of Figure 8,

Figure 10 is a plan view of a joint constructed in accordance with a further embodiment,

Figure 11 is a sectioned view taken on lines E-E Figure 10,

Figure 12 is a side view of a joint constructed in accordance with yet another embodiment, and

Figure 13 is a sectioned view taken on lines F-F of Figure 12.

In considering the aforementioned problems associated with prior composite material energy absorption devices the inventor was concerned to investigate the potential of such composite material in non-sacrificial energy absorption applications. A research study was initiated with the objective of evaluating the energy absorption potential of the bearing surface area of loaded holes in composite material.

Several test coupons were produced using unidirectional carbon fibre material in an epoxy resin. The test coupons were all 50 mm wide and 2 mm thick with various orientations of the carbon fibres. These include ± 45 degree layups, 0/90/0 degree layups and ± 45/90 degree layup sequences.

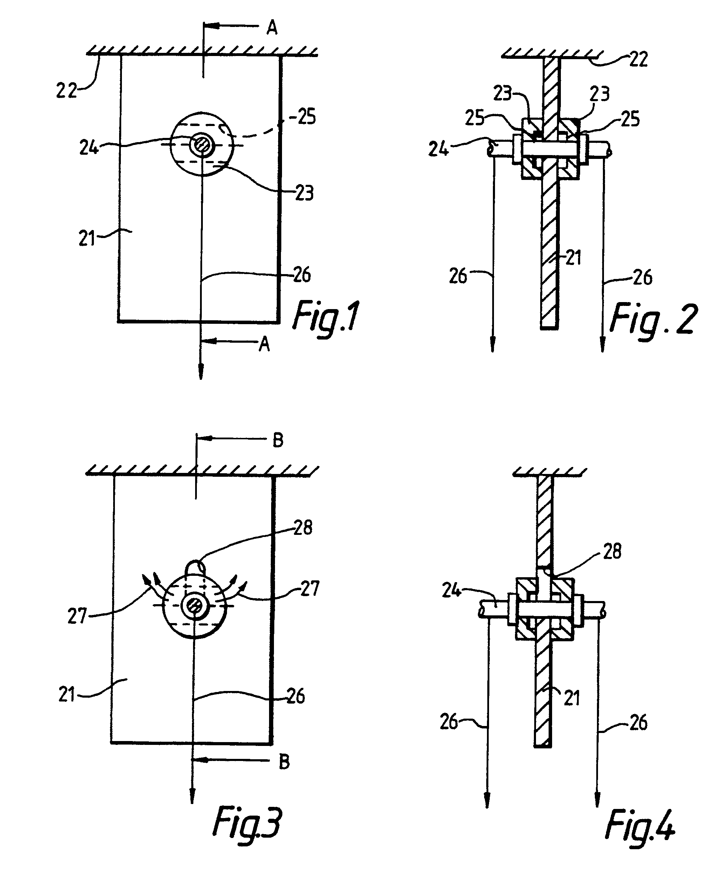

Figures 1 to 4 inclusive illustrate schematically the test apparatus and procedure used in the study. Thus, a composite material test coupon 21 is anchored at one end as shown at 22. Two identical perforated annular discs in the form of washers 23 are clamped on opposed faces of the coupon 21 by a 6 mm diameter bolt 24 extending through complementary holes in the washers 23 and the test coupon 21.

The internal surface of both washers 23, i.e. the surface that contacts the test coupon, is provided with a composite material debris release passage in the form of a groove 25 extending across the entire diameter so as to extend between the surface of the bolt hole and diametrically opposed surfaces of the washers 23.

It is to be noted that, for comparison, tests were also conducted using plain washers, i.e. without the composite material debris releasepassages, and with washers having an alternative construction of composite material release passage in the form of a counterbore in the contacting surface concentric with the attachment hole.

Static and dynamic loads were then applied to various of the test coupons as illustrated schematically by arrows 26 in Figures 1 and 2.

The results of the tests, which will be discussed in more detail hereinafter, are shown schematically for convenience in Figures 3 and 4.

Thus a load applied to the bolt 24 as indicated by arrows 26 eventually caused a failure at the bearing surface area of the hole through the coupon 21 resulting in a disintegration of the bearing surface. Composite material debris derived from this surface disintegration is automatically released through the grooves 25 as indicated at 27 so that undamaged material is continuously exposed to the loading surface of the bolt 24 to enable the failure to progress in a controlled manner as indicated by the resulting elongated shape 28 of the hole through test coupon 21.

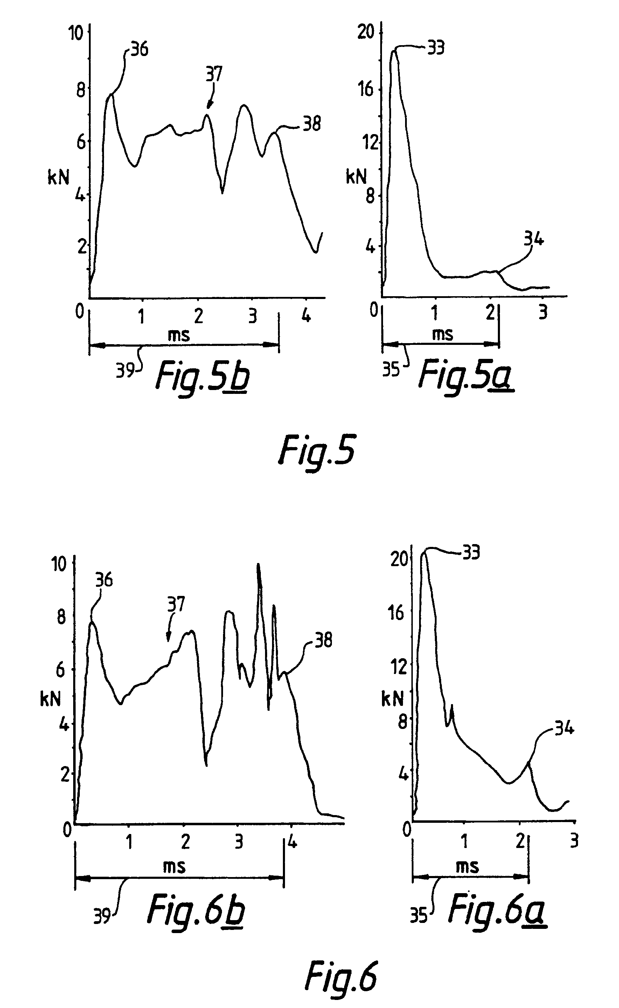

The graphs of Figures 5 and 6 are dynamic load (kN)/time (ms) curves for test coupons having a ± 45 degree lay up (Figure 5) and a 0, ± 45, 90 degree lay up (Figure 6).

Testing was accomplished with an input energy of 137 Nm applied at 9.5 metres/second and tests were carried out using plain washers (Figures 5a and 6a) and grooved washers (Figures 5b and 6b).

As shown in Figure 5a an initial steep rise in the applied load caused a failure at point 33 after about 0.5 ms which was followed by catastrophic failure at point 34 after about 2 ms and an overall extension of the test coupon indicated at 35 of about 5 mm. Comparing now the results shown in Figure 5b an initial failure at point 36 after about 0.5 ms is followed by a period 37 of fairly uniform loading until all input energy is absorbed as indicated at point 38. This occurred in a time of about 3.5 ms and an extension indicated at 39 of about 16 mm.

Generally similar results were obtained with the 0, ± 45, 90 degree lay up test coupon shown in Figure 6 and like reference numerals are used to indicate similar criteria. In this case however, the extension 35 before catastrophic failure of the test with plain washers (Figure 6a) was about 9 mm.

Further tests were conducted using test coupons having other fibre lay-up orientations with generally similar results. Thus, it was noted that all tests using plain washers resulted either in catastrophic failure of the test coupon or extremely high loadings, whereas in the comparable tests with the grooved washers, no catastrophic failures were noted and the applied loads were reduced.

These tests therefore showed clearly that post bearing surface failure characteristics of composite materials are highly dependent on clamping conditions. Thus the tests with plain washers illustrated in Figures 5a, and 6a, showed that the respective test coupons were not capable of sustaining bearing surface failures over extensions greater than about 9 mm without catastrophic tensile or shear failures, and this is thought to be due to crushed material building up ahead of the bolt and effectively increasing the loaded area. This results in a rapid increase in supported load and clearly catastrophic failure.

In comparison, the tests illustrated in Figures 5b, and 6b, showed that by providing for the controlled release of composite material debris derived from the disintegration of the bearing surface area, catastrophic failure could be prevented or at least significantly delayed. Furthermore it is noted that the sustained failure loads remained more constant and were not dependent on a particular laminate lay-up sequence or fibre orientation, and these features are due to the removal of debris from the disintegration of the bearing surface which continually exposed undamaged material to the loading surface.

In other words, it had been shown that the shape of post failure deflection curves could controlled by the removal of damaged material from the failure surface to provide a mechanism of energy absorption with minimum impact on post failure structural properties. The device operates equally efficiently under either tensile or compressive loading and since it is independent of laminate ply orientation, can also be used as a load limiting rotary joint or hinge.

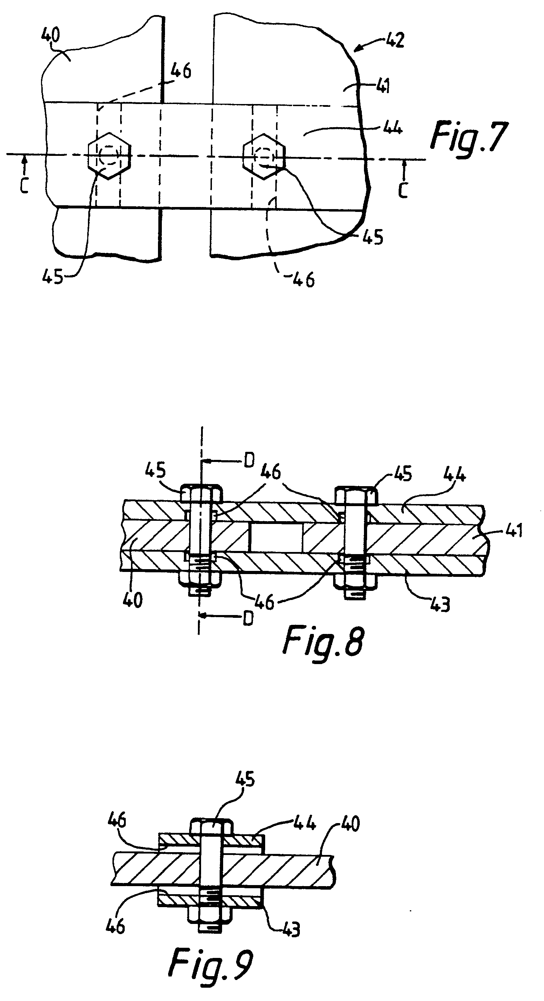

Figures 7 to 13 inclusive illustrate some exemplary joint configurations constructed in accordance with the invention.

Referring first to Figures 7 to 9 inclusive, two composite material portions 40 and 41 of a composite structure 42 are joined through a butt type joint by clamping means comprising two splice plates 43 and 44 attached to the respective portions by fastener means in the form of bolts 45 extending through complementary holes. Composite material release means are provided in the form of grooves 46 in the surface of the splice plates 43 and 44 which contact the surfaces of the composite portions 40 and 41. The grooves 46 extend across the width of the splice plates 43 and 44 in the vicinity of the holes so as to provide a passageway between the holes and the external surfaces. The width of grooves 46 is greater than a diametral dimension of the bolts 45.

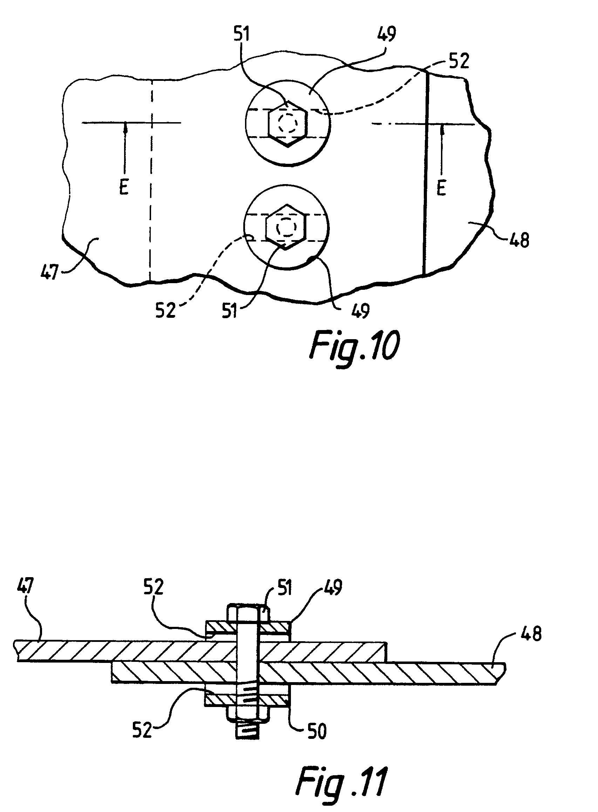

Figures 10 and 11 illustrate a lap type joint for joining flat composite portions 47 and 48 utilising perforated annular disc type clamping means in the form of washers 49 and 50 secured by a bolt 51. The washers 49 and 50 each have a composite material release groove 52 extending diametrically across its inner surface, again having a width dimension greater than a diametral dimension of the bolts 51.

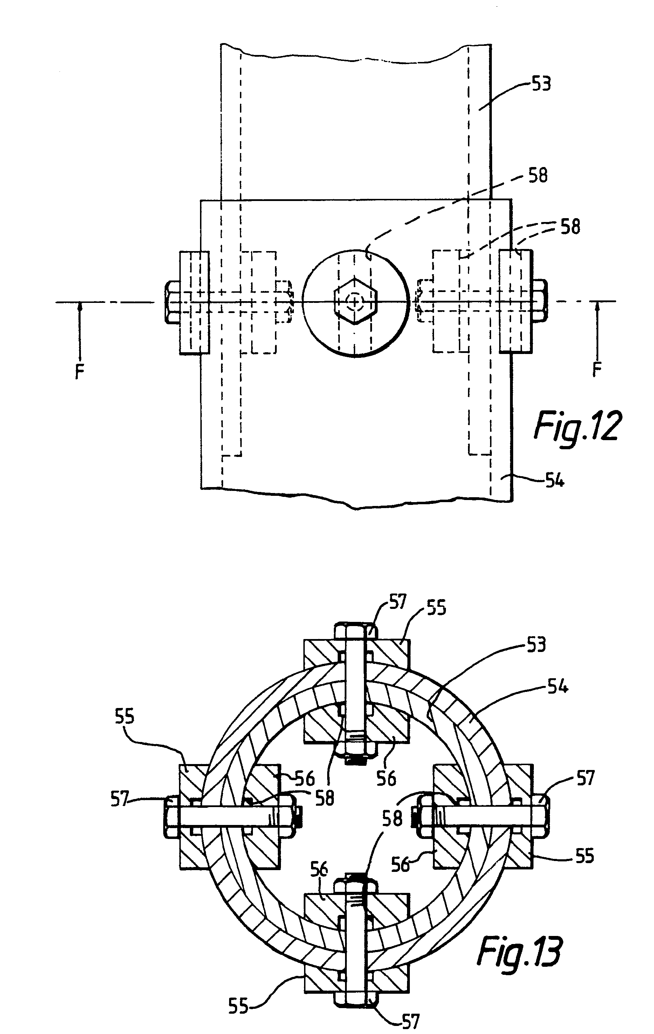

Figures 12 and 13 illustrate a lap type joint used to join tubular composite portions 53 and 54 according to the invention. The portions are again secured using a clamping means in the form of washers 55 and 56 secured by bolts 57. The washers are grooved on their inner surface as shown at 58 (Figure 13) to effect release of composite material in the event of overloading of the joint and in the manner hereinbefore described.

It will be apparent that in all embodiment an amount of overlap of the components of the joint is necessary to facilitate the described process of energy absorption, and that the amount of overlap will determine the absorption achieved before failure occurs in a particular joint.

In further unillustrated embodiments the washers of Figures 10 to 13 can comprise continuous drilled plates grooved on their inner faces at all bolt hole locations in order to provide, additionally, local reinforcement of the joint. In some applications, the composite material release means may comprise a counterbore located concentrically around the fastener means; however, it is not considered that such an embodiment could provide the full advantages of the grooves since tests showed that the limited volume counterbore would eventually be filled up with material from the disintegrating surface with a subsequent rapid increase in loading and, consequently, failure of the joint. A load limiting rotary joint or hinge according to the invention could have a mechanical pivot about which rotary movement occurs during overloading with a plurality of the energy absorbing joints of this invention spaced concentrically around the pivot so that the controlled failure of the composite portion take place along a circular path centred at the pivot.

Whilst several embodiments of the invention have been described and illustrated it will be understood that many modifications may be made without departing from the scope of the invention as defined in the appended claims. For example the clamping means with the composite material release passageway may be provided on one surface only of the joint and the invention can therefore be utilised in a joint between a composite portion and a non-composite (e.g. metallic) portion in which the clamping means is used on the surface of the composite portion. The fastener means such as the bolts 51 of the embodiment of Figures 10 and 11 could be formed integral with the grooved washers 49 in which case the circumference of the washers 49 could be provided with opposed flat portions to prevent rotation during clamping of portions 47 and 48. Alternative reinforcing materials may be used such as glass or boron fibres.

## Claims

1. An energy absorbing joint for joining separate portions of a structure at least one of which is a composite material portion (21 ; 40 ; 41 ; 53, 54) and which disintegrates during energy absorbtion, characterised by clamping means (23 ; 43, 44 ; 49, 50 ; 55, 56) for location on a surface of the composite portion, fastener means (24 ; 45 ; 57) extending through complementary holes in the joint portions for securing the clamping means and joint portions together and composite material debris release means in that surface of the clamping means which contacts the surface of the composite portion to permit the controlled release of composite material debris derived from disintegration of the bearing surface of the hole in the composite portion and caused by an excess load on the joint.

2. A joint as claimed in Claim 1, further characterised in that the composite material release means comprise a counterbore concentric of said fastener means.

3. A joint as claimed in Claim 1, further characterised in that the composite material release means comprise at least one groove 25 extending in the contact surface of the clamping means between the fastener means and an external surface of the clamping means.

4. A joint as claimed in Claim 3, further characterised in that the width of the groove is greater than a diametral dimension of the fastener means.

5. A joint as claimed in any preceding claim, further characterised in that the clamping means comprise a splice plate (43, 44) for joining said separate portions by way of a butt type joint.

6. A joint as claimed in any preceding claim, further characterised in that the clamping means comprise a perforated annular disc (49, 50) for joining said separate portions by way of a lap type joint.

7. A joint as claimed in any preceding claim, further characterised in that said fastener means comprises a bolt located through the holes in the joint portions and a mating hole in the clamping means.

## Ansprüche

1. Energieabsorbierende Verbindung zum Verbinden separater Teile einer Struktur, wobei mindestens einer ein Verbundwerkstoffteil (21 ; 40 ; 41 ; 47 ; 48 ; 53 ; 54) ist und bei der Energieabsorbierung zerstört wird, gekennzeichnet durch Klemmittel (23 ; 43, 44 ; 49, 50 ; 55, 56) zum Anordnen auf einer Fläche des Verbundteiles, Befestigungsmittel (24 ; 45 ; 51 ; 59), die sich durch komplementäre Öffnungen in den Verbindungsteilen erstrecken, zum Sichern der Klemmittel und der Ver- bindungsteile aneinander und eine Abführreinrichtung für Verbundwerkstofftrümmer an der Oberfläche der Klemmittel, die die Oberfläche des Verbundteiles kontaktierten, um die überwachte Lösung derjenigen Verbundwerkstofftrümmer zu erlauben, welche von der Zerstörung der Lagerfläche der Öffnung in dem Verbundteil herrühren und durch eine Überlastung der Verbindung entstehen.

2. Verbindung nach Anspruch 1, ferner dadurch gekennzeichnet, daß die Abführreinrichtung für die Verbundwerkstofftrümmer eine Senköffnung konzentrisch mit den Befestigungsmitteln umfaßt.

3. Verbindung nach Anspruch 1, ferner dadurch gekennzeichnet, daß die Abführreinrichtung für die Verbundwerkstofftrümmer wenigstens eine Nut (25, 46, 52, 58) umfaßt, die sich in der Berührungsfläche der Klemmittel zwischen den Befestigungsmitteln und einer Außenfläche der Klemmittel erstreckt.

4. Verbindung nach Anspruch 3, ferner dadurch gekennzeichnet, daß die Breite der Nut größer als eine diametrale Ausdehnung der Befestigungsmittel ist.

5. Verbindung nach einem der vorangehenden Ansprüche, ferner dadurch gekennzeichnet, daß die Klemmittel ein Stoßblech (43, 44) umfassen zum Verbinden der einzelnen Teile mittels einer Verbindung nach Art einer Flachflanschverbindung.

6. Verbindung nach einem der vorangehenden Ansprüche, ferner dadurch gekennzeichnet, daß die Klemmittel eine perforierte ringförmige Scheibe (49, 50 ; 55, 56) umfassen zum Verbinden der einzelnen Teile mittels einer Verbindung des Typs der Überlappungsverbindung.

7. Verbindung nach einem der vorangehenden Ansprüche, ferner dadurch gekennzeichnet, daß die Befestigungsmittel einen in den Öffnungen in den Verbindungsteilen angeordneten Stift und eine entsprechende Öffnung in den Klemmitteln umfassen.

## Revendications

1. Joint à absorption d'énergie pour relier des éléments séparés d'une structure dont l'un au moins est un élément en matériau composite (21 ; 40 ; 41 ; 47 ; 48 ; 53 ; 54) et se désintègre pendant l'absorption d'énergie, caractérisé en ce qu'il comprend des moyens de serrage (23 ; 43, 44 ; 49, 50 ; 55, 56) à placer sur une surface de l'élément composite, des moyens de fixation (24 ; 45 ; 51 ; 57) traversant des trous complémentaires prévus dans les éléments du joint pour fixer ensemble les moyens de serrage et les éléments du joint, et des moyens de dégagement des débris de matériau composite dans la surface des moyens de serrage qui est en contact avec la surface de l'élément composite pour permettre l'évacuation contrôlée des débris de matériau composite provenant de la désintégration de la surface de portée du trou dans l'élément composite et engendrés par une charge excessive sur le joint.

2. Joint suivant la revendication 1, caractérisé en outre en ce que les moyens de dégagement des débris de matériau composite comprennent un suralésage concentrique auxdits moyens de fixation.

3. Joint suivant la revendication 1, caractérisé en outre en ce que les moyens de dégagement des débris de matériau composite comprennent au moins une rainure (25, 46, 52, 58) s'étendant dans la surface de contact des moyens de serrage, entre les moyens de fixation et une surface extérieure des moyens de serrage.

4. Joint suivant la revendication 3, caractérisé en outre en ce que la largeur de la rainure est supérieure à une dimension diamétrale des moyens de fixation.

5. Joint suivant l'une quelconque des revendications précédentes, caractérisé en outre en ce que les moyens de serrage comprennent une plaque d'éclissage (43, 44) pour relier les dits éléments séparés au moyen d'un joint du type bout à bout.

6. Joint suivant l'une quelconque des revendications précédentes, caractérisé en outre en ce que les moyens de serrage comprennent un disque annulaire perforé (49, 50, 55, 56) pour relier lesdits éléments séparés au moyen d'un joint du type à recouvrement.

7. Joint suivant l'une quelconque des revendications précédentes, caractérisé en outre en ce que les dits moyens de fixation comprennent un boulon passant dans les trous des éléments du joint et dans un trou correspondant prévu dans les moyens de serrage.

Fig.1

Fig.2

Fig.3

Fig.4

*Fig.5*

*Fig.6*

*Fig.7*

*Fig.8*

*Fig.9*

Fig.10

Fig .11

Fig.12

Fig.13